# EUROPÄISCHE PATENTSCHRIFT

(11) **EP 3 172 416 B1**
(45) Veröffentlichungstag und Bekanntmachung des Hinweises auf die Patenterteilung: **12.09.2018**
(21) Anmeldenummer: 15738831.5
(22) Anmeldetag: 11.06.2015
(51) Int. Cl.: F01N 3/28, F01N 13/00, B01D 53/94

(54) **KATALYSATOREINHEIT UND VERFAHREN ZUM HERSTELLEN DERSELBEN**
CATALYST UNIT AND CORRESPONDING MANUFACTURING METHOD
UNITÉ CATALYTIQUE ET PROCÉDÉ DE FABRICATION CORRESPONDANT

(30) Priorität: 25.07.2014 DE 102014010857
(43) Veröffentlichungstag der Anmeldung: 31.05.2017
(73) Patentinhaber: MAN Diesel & Turbo SE, 86153 Augsburg (DE)
(72) Erfinder: DÖRING, Andreas, 82008 München/Unterhaching (DE)
(86) Internationale Anmeldenummer: PCT/EP2015/001175
(87) Internationale Veröffentlichungsnummer: WO 2016/012067

(56) Entgegenhaltungen:
- DE-A1- 3 046 921
- DE-A1- 3 804 559
- DE-U1- 8 438 423
- JP-A- S5 021 121
- US-A- 4 343 074
- US-A- 5 118 476
- US-A- 5 329 698
- US-A1- 2007 033 803
- ANONYMOUS: "Catalytic converter design and method of making the same", RESEARCH DISCLOSURE, MASON PUBLICATIONS, HAMPSHIRE, GB, Bd. 475, Nr. 51, 1. November 2003 (2003-11-01), XP007133099, ISSN: 0374-4353

## Beschreibung

Die Erfindung betrifft eine Katalysatoreinheit für einen Abgaskatalysator gemäß dem Oberbegriff des Anspruchs 1. Des Weiteren betrifft die Erfindung einen Abgaskatalysator und ein Verfahren zum Herstellen einer Katalysatoreinheit für einen Abgaskatalysator.

Abgaskatalysatoren für Großmotoren, wie zum Beispiel für stationär betriebene Großdiesel-Brennkraftmaschinen oder auch Schiffsdiesel-Brennkraftmaschinen, verfügen typischerweise über mehrere Katalysatoreinheiten, wobei jede Katalysatoreinheit einen von Abgas durchströmten, keramischen Katalysatorkörper und ein metallisches Gehäuse aufweist, welches den Katalysatorkörper senkrecht zur Durchströmungsrichtung desselben gesehen zumindest abschnittsweise umgibt. Der keramische Katalysatorkörper einer Katalysatoreinheit wird auch als Wabenkörper oder Honeycomb und das Gehäuse einer Katalysatoreinheit auch als Canning bezeichnet.

Ein keramischer Katalysatorkörper für eine Katalysatoreinheit verfügt fertigungstechnisch bedingt über Toleranzen im Bereich von mehreren Millimetern. Die metallischen Gehäuse müssen jedoch einen definierten Außenquerschnitt bzw. eine definierte Außenkontur aufweisen, um eine optimale Anbindung der Katalysatoreinheiten an andere Baugruppen eines Abgassystems der Brennkraftmaschine zu gewährleisten, so zum Beispiel an abgasführende Leitungen oder an Reaktorgehäusen. Daher wird im Bereich jeder Katalysatoreinheit zwischen dem Katalysatorkörper und dem Gehäuse zum Toleranzausgleich mindestens eine Lagermatte positioniert, die sich dann in Durchströmungsrichtung des Katalysatorkörpers gesehen über die gesamte Axialerstreckung desselben zwischen den Katalysatorkörper und dem Gehäuse der jeweiligen Katalysatoreinheit erstreckt.

Da die Toleranz eines Katalysatorkörpers in Durchströmungsrichtung desselben gesehen und demnach in Axialrichtung desselben variieren kann, müssen ggf. mehrere Lagermatten oder Lagermatten unterschiedlicher Stärke entlang der Axialrichtung des Katalysatorkörpers zwischen dem Katalysatorkörper und dem Gehäuse angeordnet werden. Dies resultiert in einen hohen Fertigungsaufwand und damit hohe Fertigungskosten einer Katalysatoreinheit.

Aus der Praxis ist es ebenfalls bereits bekannt, zum Toleranzausgleich zwischen dem Katalysatorkörper einer Katalysatoreinheit und dem Gehäuse der Katalysatoreinheit das Gehäuse mit dem Katalysatorkörper unter Zwischenanordnung mindestens einer Lagermatte zu verpressen, nämlich über die gesamte axiale Erstreckung des Gehäuses bzw. der Katalysatoreinheit. Hierbei besteht das Problem, dass anschließend die Katalysatoreinheit, nämlich das Gehäuse derselben, keinen definierten Außenquerschnitt mehr aufweist, sodass die Anbindung der Katalysatoreinheit an andere Baugruppen eines Abgassystems der Brennkraftmaschine Schwierigkeiten bereitet. Insbesondere dann, wenn ein Abgaskatalysator mehrere solcher nebeneinander positionierter Katalysatoreinheiten, insbesondere in einem Reaktorgehäuse, aufweist, können sich in Summe geometrische Abweichungen im Zentimeterbereich ergeben, sodass dann weitere aufwendige Anpassungsarbeiten zur Anbindung des Abgaskatalysators an andere Baugruppen eines Abgassystems einer Brennkraftmaschine erforderlich sind. Auch dies resultiert in hohen Montagekosten bzw. Fertigungskosten.

Aus dem Dokument XP 7 133 099 A ist bereits eine Katalysatoreinheit für einen Abgaskatalysator mit einem von Abgas durchströmten, keramischen Katalysatorkörper und mit einem metallischen Gehäuse bekannt, welches den Katalysatorkörper senkrecht zur Durchströmungsrichtung desselben gesehen zumindest abschnittsweise umgibt, wobei senkrecht zur Durchströmungsrichtung des Katalysatorkörpers gesehen zwischen dem Katalysatorkörper und dem Gehäuse mindestens eine Lagermatte positioniert ist, wobei der Katalysatorkörper senkrecht zur Durchströmungsrichtung desselben unter Zwischenanordnung der oder jeder Lagermatte über einen Presssitz kraftschlüssig im Gehäuse gehalten ist, nämlich derart, dass in Durchströmungsrichtung des Katalysatorkörpers gesehen der Presssitz zwischen dem Gehäuse und dem Katalysatorkörper ausschließlich an definierten Axialpositionen ausgebildet ist, wobei das Gehäuse an den definierten Axialpositionen nutartige Vertiefungen zur abschnittsweise Verringerung des Innenquerschnitts des Gehäuses aufweist, und wobei der Presssitz zwischen dem Gehäuse und dem Katalysatorkörper ausschließlich im Bereich der nutartigen Vertiefungen ausgebildet ist.

Hiervon ausgehend liegt der vorliegenden Erfindung die Aufgabe zugrunde, eine neuartige Katalysatoreinheit für einen Abgaskatalysator, einen Abgaskatalysator mit einer solchen Katalysatoreinheit und ein Verfahren zum Herstellen einer solchen Katalysatoreinheit zu schaffen.

Diese Aufgabe wird durch eine Katalysatoreinheit nach Anspruch 1 gelöst.

Erfindungsgemäß ist der Katalysatorkörper senkrecht zur Durchströmungsrichtung desselben unter Zwischenanordnung der oder jeder Lagermatte über einen Presssitz kraftschlüssig im Gehäuse gehalten, nämlich derart, dass in Durchströmungsrichtung des Katalysatorkörpers gesehen der Presssitz zwischen dem Gehäuse und dem Katalysatorkörper ausschließlich an definierten Axialpositionen ausgebildet ist, wobei das Gehäuse an den definierten Axialpositionen nutartige Vertiefungen zur abschnittsweise Verringerung des Innenquerschnitts des Gehäuses aufweist, und wobei der Presssitz zwischen dem Gehäuse und dem Katalysatorkörper ausschließlich im Bereich der nutartigen Vertiefungen ausgebildet ist.

Mit der hier vorliegenden Erfindung wird erstmals vorgeschlagen, den Katalysatorkörper einer Katalysatoreinheit, der fertigungstechnisch Toleranzen aufweist, unter Zwischenanordnung mindestens einer Lagermatte über einen Presssitz kraftschlüssig derart im Gehäuse zu halten, dass der Presssitz in Durchströmungsrichtung des Katalysatorkörpers gesehen ausschließlich an definierten Axialpositionen ausgebildet ist. Hierzu weist das Gehäuse an den definierten Axialpositionen nutartige Vertiefungen zur abschnittsweisen Verringerung des Innenquerschnitts des Gehäuses auf, wobei der Presssitz zwischen dem Gehäuse und dem Katalysatorkörper ausschließlich im Bereich dieser nutartigen Vertiefungen ausgebildet ist. Zwischen den nutartigen Vertiefungen weist das Gehäuse in der Strömungsrichtung des Katalysatorkörpers gesehen, einen definierten Außenquerschnitt auf, wodurch dann eine problemlose Anbindung der Katalysatoreinheit bzw. eines mindestens eine Katalysatoreinheit umfassenden Abgaskatalysators an andere Baugruppen eines Abgassystems einer Brennkraftmaschine möglich ist.

Insbesondere bei der Bereitstellung eines Abgaskatalysators für einen Großmotor, der mehrere in Durchströmungsrichtung parallel nebeneinander angeordnete Katalysatoreinheiten umfasst, ist hierdurch eine einfache Anbindung des Abgaskataiysators an andere Baugruppen eines Abgassystems des Großmotors möglich.

Erfindungsgemäß ist in Durchströmungsrichtung des Katalysatorkörpers gesehen ausschließlich im Bereich der nutartigen Vertiefungen des Gehäuses mindestens eine Lagermatte zwischen dem Katalysatorkörper und dem Gehäuse positioniert. Dann, wenn die oder jede Lagermatte ausschließlich im Bereich der nutartigen Vertiefungen des Gehäuses zwischen den Katalysatorkörper und dem Gehäuse positioniert ist, kann die Verwendung solcher Lagermatten gegenüber dem Stand der Technik deutlich reduziert werden. Hierdurch ist es möglich, Fertigungskosten einer Katalysatoreinheit zu reduzieren.

Nach einer weiteren vorteilhaften Weiterbildung sind in das Gehäuse in Durchströmungsrichtung des Katalysatorkörpers gesehen stromabwärts der ersten nutartigen Vertiefung und stromaufwärts der letzten nutartigen Vertiefung Ausnehmungen eingebracht. Hierdurch ist es möglich, eine Katalysatoreinheit mit geringerem Gewicht, unter geringerem Materialeinsatz und damit geringeren Kosten herzustellen.

Der erfindungsgemäße Abgaskatalysator ist in Anspruch 4 und das erfindungsgemäße Verfahren zum Herstellen einer Katalysatoreinheit für einen Abgaskatalysator ist in Anspruch 5 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: einen stark schematisierten Querschnitt durch eine erfindungsgemäße Katalysatoreinheit für einen Abgaskatalysator; und
- Fig. 2:: eine stark schematisierte perspektivische Ansicht einer erfindungsgemäßen Katalysatoreinheit für einen Abgaskatalysator.

Die hier vorliegende Erfindung betrifft eine Katalysatoreinheit für einen Abgaskatalysator einer Brennkraftmaschine, insbesondere einer stationär betriebenen Großdiesel-Brennkraftmaschine oder einer Schiffsdiesel-Brennkraftmaschine.

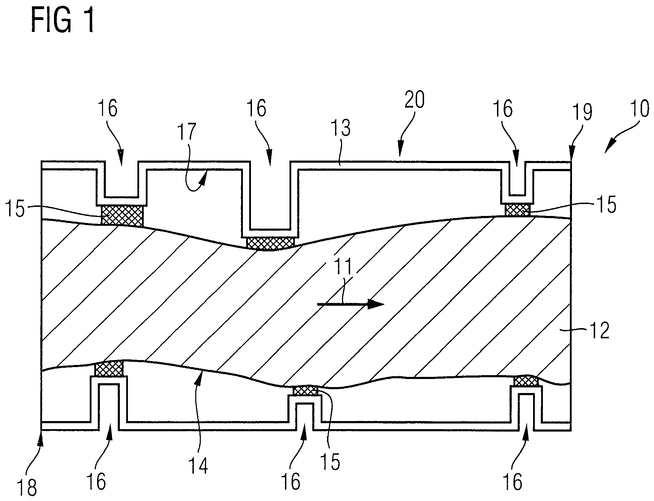

Fig. 1 zeigt einen stark schematisierten Querschnitt durch eine erfindungsgemäße Katalysatoreinheit 10 für einen Abgaskatalysator, wobei die Katalysatoreinheit 10 einen von Abgas in der Durchströmungsrichtung 11 durchströmten, keramischen Katalysatorkörper 12 und ein metallisches Gehäuse 13 aufweist, welches senkrecht zur Durchströmungsrichtung 11 des Katalysatorkörpers 12 gesehen den Katalysatorkörper 12 außen zumindest abschnittsweise umgibt. Der keramische Katalysatorkörper 12 wird auch als Wabenkörper oder Honeycomb und das metallische Gehäuse 13 auch als Canning bezeichnet. In Fig. 1 ist stark schematisiert und übertrieben dargestellt, dass der keramische Katalysatorkörper 12 eine Außenkontur bzw. einen Außenquerschnitt 14 aufweist, der fertigungsbedingt über Toleranzen verfügt, die in Durchströmungsrichtung 11 desselben gesehen variieren können.

Der Katalysatorkörper 12 ist senkrecht zur Durchströmungsrichtung desselben gesehen unter Zwischenanordnung mindestens einer Lagermatte 15 über einen Presssitz kraftschlüssig im Gehäuse 13 gehalten, nämlich derart, dass in Durchströmungsrichtung des Katalysatorkörpers 12 gesehen der Presssitz zwischen dem Gehäuse 13 und dem Katalysatorkörper 12 ausschließlich an definierten Axialpositionen des Katalysatorkörpers 12 bzw. des Gehäuses 13 ausgebildet ist. Hierzu weist das Gehäuse 13 an definierten Axialpositionen nutartige Vertiefungen 16 auf, über welche eine Innenkontur bzw. einen Innenquerschnitt 17 des Gehäuses 13 abschnittsweise verringert werden kann. Der Presssitz zwischen dem Gehäuse 13 und dem Katalysatorkörper 12 ist ausschließlich im Bereich dieser nutartigen Vertiefungen 16 ausgebildet, wobei in Durchströmungsrichtung 11 des Katalysatorkörpers 12 gesehen die oder jede Lagermatte 15 ausschließlich im Bereich dieser nutartigen Vertiefungen 16 zwischen dem Katalysatorkörper 12 und dem Gehäuse 13 positioniert ist.

Mit der erfindungsgemäßen Ausgestaltung der Katalysatoreinheit 10 ist es möglich, eine Katalysatoreinheit 10 bereitzustellen, deren Gehäuse 13 an allen Axialpositionen, die zwischen den nutartigen Vertiefungen 16 positioniert sind, insbesondere im Bereich einer strömungseintrittsseitigen Stirnseite 18 und im Bereich einer strömungsaustrittsseitigen Stirnseite 19, eine Außenkontur bzw. einen Außenquerschnitt 20 aufweist, der exakt definiert und so gut wie nicht toleranzbehaftet ist.

Dann, wenn mehrere solcher Katalysatoreinheiten 10 nebeneinander in einem Abgaskatalysator positioniert werden, verfügt auch der Abgaskatalysator über einen definierten, exakt eingestellten und nahezu toleranzfreien Außenquerschnitt bzw. über eine entsprechende Außenkontur. Daher ist dann eine problemlose Anbindung des Abgaskatalysators an andere Baugruppen eines Abgassystems einer Brennkraftmaschine möglich.

Erfindungsgemäß wird demnach die toleranzbehaftete Außenkontur 14 eines keramischen Katalysatorkörpers 12 einer Katalysatoreinheit 10, die ein Gehäuse 13 mit einer exakt definierten Außenkontur bzw. einem exakt definierten Außenquerschnitt 20 aufweist, dadurch kompensiert, dass das Gehäuse 13 an definierten Axialpositionen nutartige Vertiefungen 16 aufweist, welche den Innenquerschnitt 17 des Gehäuses 13 und damit auch den Außenquerschnitt desselben ausschließlich an definierten Axialpositionen verändern, um an diesen definierten Axialpositionen den keramischen Katalysatorkörper 12 über einen Presssitz im metallischen Gehäuse 13 unter Zwischenanordnung einer Lagermatte 15 ausschließlich an diesen Axialpositionen zu fixieren und damit zu halten.

Insbesondere im Bereich der strömungseintrittsseitigen Stirnseite 18 und der strömungsaustrittsseitigen Stirnseite 19 sowie alle anderen Axialpositionen des Gehäuses 13 außerhalb der nutartigen Vertiefungen 16 weist dasselbe einen nahezu toleranzfreien, definierten Außenquerschnitt 20 auf.

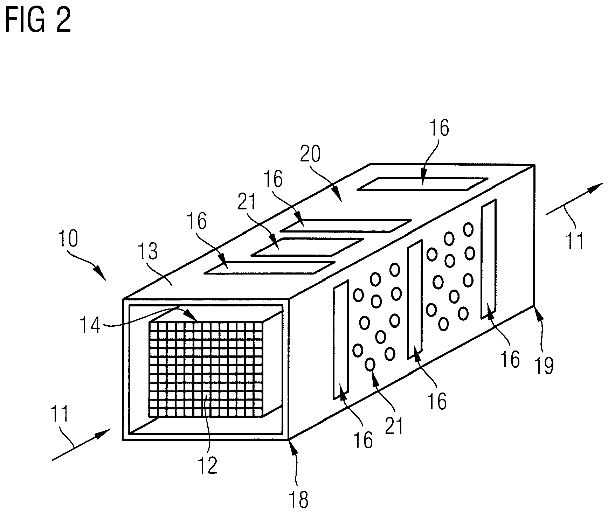

Fig. 2 zeigt eine perspektivische Ansicht einer Weiterbildung der Katalysatoreinheit 10, wobei gemäß Fig. 2 in das Gehäuse 13 in Durchströmungsrichtung 11 des Katalysatorkörpers 12 gesehen stromabwärts der ersten nutartigen Vertiefung 16 und stromaufwärts der letzten nutartigen Vertiefung 16 Ausnehmungen 21 eingebracht sind. Bei diesen Ausnehmungen 21 kann es sich um runde Aussparungen oder auch um eckige Aussparungen beliebiger Dimension handeln. Durch diese Ausnehmungen 21 kann das Gewicht der Katalysatoreinheit 10 reduziert werden. Ferner ist es hierdurch möglich, eine Katalysatoreinheit 10 kostengünstiger zu fertigen, da dieselbe im Bereich des metallischen Gehäuses 13 weniger Material benötigt.

Zum Herstellen einer erfindungsgemäßen Katalysatoreinheit 10 werden zunächst ein keramischer Katalysatorkörper 12, ein metallisches Gehäuse 13 und mindestens eine Lagermatte 15 bereitgestellt. Anschließend wird der keramische Katalysatorkörper 12 zusammen mit der oder jeder Lagermatte 15 im metallischen Gehäuse 13 angeordnet und der Presssitz zwischen dem Gehäuse 13 und dem Katalysatorkörper 12 an definierten Axialpositionen ausgebildet.

Hierzu kann so vorgegangen werden, dass ein Gehäuse 13 mit nutartigen Vertiefungen 16 an definierten Axialpositionen bereitgestellt wird, wobei der Innenquerschnitt 17 des Gehäuses 13 im Bereich der nutartigen Vertiefungen 16 bereits kleiner als der Außenquerschnitt des von der oder jeder Lagermatte 15 umgebenen Katalysatorkörpers 13 an denjenigen Axialpositionen ist, an welchen der Presssitz zwischen dem Gehäuse 13 und dem Katalysatorkörper 12 auszubilden ist. Bei der Anordnung des Katalysatorkörpers 12 und der oder jeder Lagermatte 15 im Gehäuse 13 bildet sich dann der Presssitz zwischen dem Gehäuse 13 und dem Katalysatorkörper 12 im Bereich der nutartigen Vertiefungen 16 automatisch aus.

Diese Vorgehensweise zur Herstellung der Katalysatoreinheit 10 bietet sich insbesondere dann an, wenn, wie in Fig. 1 und 2 gezeigt, sowohl der Katalysatorkörper 12 als auch das Gehäuse 13 im Querschnitt rechteckig ausgebildet sind.

In diesem Fall kann dann ein an einer Längswand zunächst offenes Gehäuse 13 bereitgestellt werden, um dann den Katalysatorkörper 12 zusammen mit der oder jeder Lagermatte 15 im Gehäuse 13 anzuordnen und anschließend im Bereich der offenen Längswand des Gehäuses 13 eine Wand desselben zu positionieren und mit den anderen Wänden des Gehäuses 13 zum Beispiel durch Verschweißen fest zu verbinden. Durch das Zusammenfügen des Gehäuses 13 ergibt sich dann automatisch der Presssitz zwischen dem Gehäuse 13 und dem Katalysatorkörper 12 an den definierten Axialpositionen der nutartigen Vertiefungen 16.

Die obige Vorgehensweise ist jedoch auch dann einsetzbar, wenn eine Katalysatoreinheit mit einem im Querschnitt runden, keramischen Katalysatorkörper und einem im Querschnitt runden, metallischen Gehäuse bereitzustellen ist.

In diesem Fall ist es dann zum Beispiel möglich, das im Querschnitt runde, rohrartige Gehäuse 13, welches bereits nutartige Vertiefungen aufweist, aus zwei Halbschalen zusammenzusetzen, wobei dann der Katalysatorkörper 12 zunächst in eine erste Halbschale des Gehäuses 13 eingelegt wird, um anschließend die zweite Halbschale aufzusetzen und mit der ersten Halbschale, in die zuvor der Katalysatorkörper 12 eingesetzt wurde, zum Beispiel durch Verschweißen fest zu verbinden.

Auch hierbei bildet sich dann automatisch der Presssitz zwischen dem Gehäuse 13 und dem Katalysatorkörper 12 an den definierten Axialpositionen der nutartigen Vertiefungen 16 des Gehäuses 13 aus.

Nach einer zweiten Variante der Erfindung kann die Katalysatoreinheit 10 dadurch bereitgestellt werden, dass ein Gehäuse 13 mit nutartigen Vertiefungen 16 an definierten Axialpositionen bereitgestellt wird, wobei der Innenquerschnitt 17 des Gehäuses 13 im Bereich der nutartigen Vertiefungen 16 noch größer als der Außenquerschnitt des von der oder jeder Lagermatte 15 umgebenen Katalysatorkörpers 12 an denjenigen Axialpositionen ist, an welchen der Presssitz zwischen dem Gehäuse 13 und dem Katalysatorkörper 12 auszubilden ist. Nach dem Anordnen des Katalysatorkörpers 12 in dem Gehäuse 13 zusammen mit der oder jeder Lagermatte 15 wird dann das Gehäuse 13 im Bereich der nutartigen Vertiefungen unter Ausbildung des Presssitzes zwischen dem Gehäuse 13 und dem Katalysatorkörper 12 abschnittsweise zusammengepresst, also nur im Bereich der nutartigen Vertiefungen 16, sodass zwischen den nutartigen Vertiefungen 16 die definierte Außenkontur bzw. der definierte Außenquerschnitt 20 des Gehäuses 13 unverändert bleibt.

Bei dieser Vorgehensweise wird der Katalysatorkörper 12 vorzugsweise an denjenigen Axialpositionen, an welchen der Presssitz mit den nutartigen Vertiefungen 16 des Gehäuses 13 auszubilden ist, vermessen, um so das Maß, um welches die nutartigen Vertiefungen 16 durch Krafteinwirkung nach dem Anordnen des Katalysatorkörpers 12 zusammen mit der oder jeder Lagermatte 15 im Gehäuse 13 zusammengepresst werden soll, vorab exakt zu bestimmen.

Nach einer weiteren Variante kann die Katalysatoreinheit 10 dadurch hergestellt werden, dass zunächst ein Gehäuse ohne nutartige Vertiefungen bereitgestellt wird. Der Innenquerschnitt 17 eines solchen Gehäuses 13 ist dann größer als der Außenquerschnitt des von der oder jeder Lagermatte 15 umgebenen Katalysatorkörpers 12. Nach dem Anordnen des Katalysatorkörpers 12 und der oder jeder Lagermatte 15 im Gehäuse 13 wird das Gehäuse 13 abschnittsweise unter Ausbildung nutartiger Vertiefungen 16 unter Ausbildung des Presssitzes zwischen dem Gehäuse 13 und dem Katalysatorkörper 12 im Bereich der nutartigen Vertiefungen 16 zusammengepresst.

Bei dieser Variante ist eine höhere Kraft zum Zusammenpressen des Gehäuses nötig, da die nutartigen Vertiefungen 16 an den definierten Axialpositionen des Gehäuses 13 erst noch ausgebildet werden müssen. In diesem Fall ist dann insbesondere eine Abstützung des Gehäuses 13 im Bereich der strömungseintrittsseitigen Stirnseite 18 sowie der strömungsaustrittsseitigen Stirnseite 19 erforderlich, um eine Verformung der definierten Außenkontur bzw. des definierten Außenquerschnitts 20 des Gehäuses 13 außerhalb der nutartigen Vertiefungen 16 zu verhindern.

Es liegt demnach im Sinne der hier vorliegenden Erfindung, an einer Katalysatoreinheit 10, die einen keramischen Katalysatorkörper 12 und ein metallisches Gehäuse 13 umfasst, das metallische Gehäuse 13 abschnittsweise über nutartige Vertiefungen 16 einzuziehen, um so mit Bereich der Vertiefungen 16 eine Verpressung des Gehäuses 13 mit dem Katalysatorkörper 12 bereitzustellen. Außerhalb dieser nutartigen Vertiefungen 16 bleibt der definierte Außenquerschnitt 20 des Gehäuses 13 unverändert. Es ist dann eine problemlose Integration der Katalysatoreinheit 10 einen Abgaskatalysator sowie eine problemlose Anbindung des Abgaskatalysators an andere Baugruppen eines Abgassystems einer Brennkraftmaschine möglich. Bedingt dadurch, dass der Presssitz zwischen dem Gehäuse 13 und dem Katalysatorkörper 12 ausschließlich im Bereich der nutartigen Vertiefungen 16 ausgebildet ist, kann auf eine in Durchströmungsrichtung gesehen bzw. in Axialrichtung gesehen durchgehende Lagermatte 15 verzichtet werden. Die Lagermatte 15 umgibt den Katalysatorkörper 12 demnach ausschließlich in dem Bereich, in welchem der Presssitz zwischen dem Katalysatorkörper 12 und dem metallischen Gehäuse 13 ausgebildet ist. Ferner können in das Gehäuse 13 in Axialrichtung gesehen zwischen nutartigen Vertiefungen 16 Ausnehmungen in Form von Löchern und/oder Schlitzen eingebracht werden, wodurch das Gewicht und die Materialkosten für das metallische Gehäuse 13 und damit letztendlich für die Katalysatoreinheit weiter reduziert werden können.

Der Austritt und/oder Eintritt des Gehäuses 13 können hinsichtlich der Außenabmessungen durch Verformen, insbesondere durch Verpressen oder Aufweiten, auf ein definiertes Maß kalibriert werden.

### Bezugszeichenliste

- 10: Katalysatoreinheit
- 11: Durchströmungsrichtung
- 12: Katalysatorkörper
- 13: Gehäuse
- 14: Außenquerschnitt
- 15: Lagermatte
- 16: Vertiefung
- 17: Innenquerschnitt
- 18: Stirnseite
- 19: Stirnseite
- 20: Außenquerschnitt
- 21: Ausnehmung

## Patentansprüche

1. Katalysatoreinheit (10) für einen Abgaskatalysator, mit einem von Abgas durchströmten, keramischen Katalysatorkörper (12) und mit einem metallischen Gehäuse (13), welches den Katalysatorkörper (12) senkrecht zur Durchströmungsrichtung (11) desselben gesehen zumindest abschnittsweise umgibt, wobei senkrecht zur Durchströmungsrichtung (11) des Katalysatorkörpers (12) gesehen zwischen dem Katalysatorkörper (12) und dem Gehäuse (13) mindestens eine Lagermatte (15) positioniert ist, wobei der Katalysatorkörper (12) senkrecht zur Durchströmungsrichtung desselben unter Zwischenanordnung der oder jeder Lagermatte (15) über einen Presssitz kraftschlüssig im Gehäuse (13) gehalten ist, nämlich derart, dass in Durchströmungsrichtung (11) des Katalysatorkörpers (12) gesehen der Presssitz zwischen dem Gehäuse und dem Katalysatorkörper ausschließlich an definierten Axialpositionen ausgebildet ist, wobei das Gehäuse (13) an den definierten Axialpositionen nutartige Vertiefungen (16) zur abschnittsweise Verringerung des Innenquerschnitts (17) des Gehäuses (13) aufweist, und wobei der Presssitz zwischen dem Gehäuse (13) und dem Katalysatorkörper (12) ausschließlich im Bereich der nutartigen Vertiefungen (16) ausgebildet ist,
**dadurch gekennzeichnet, dass** in Durchströmungsrichtung (11) des Katalysatorkörpers (12) gesehen ausschließlich im Bereich der nutartigen Vertiefungen (16) des Gehäuses (13) mindestens eine Lagermatte (15) zwischen dem Katalysatorkörper (12) und dem Gehäuse (13) positioniert ist.

2. Katalysatoreinheit nach Anspruch 1, **dadurch gekennzeichnet, dass** das Gehäuse (13) in Durchströmungsrichtung (11) des Katalysatorkörpers (12) gesehen zwischen den nutartigen Vertiefungen (16) einen definierten Außenquerschnitt (20) aufweist.

3. Katalysatoreinheit nach einem der Ansprüche 1 bis 2, **dadurch g kennz ichnet, dass** in das Gehäuse (13) in Durchströmungsrichtung (11) des Katalysatorkörpers (12) gesehen stromabwärts der ersten nutartigen Vertiefung (16) und stromaufwärts der letzten nutartigen Vertiefung (16) Ausnehmungen (21) eingebracht sind.

4. Verfahren zum Herstellen einer Katalysatoreinheit nach einem der Ansprüche 1 bis 3, mit zumindest folgenden Schritten:
a) Bereitstellen eines keramischen Katalysatorkörpers;
b) Bereitstellen eines metallischen Gehäuse;
c) Bereitstellen mindestens einer Lagermatte;
d) Anordnen des keramischen Katalysatorkörpers und der oder jeder Lagermatte im metallischen Gehäuse und Ausbildung des Presssitzes zwischen dem Gehäuse und dem Katalysatorkörper,
**dadurch gekennzeichnet, dass** ein Gehäuse mit nutartigen Vertiefungen an definierten Axialpositionen desselben bereitgestellt wird, wobei der Innenquerschnitt des Gehäuses im Bereich der nutartigen Vertiefungen größer als der Außenquerschnitt des von der oder jeder Lagermatte umgebenen Katalysatorkörpers an denjenigen Axialpositionen ist, an welchen der Presssitz zwischen dem Gehäuse und dem Katalysatorkörper auszubilden ist, wobei nach dem Anordnen des Katalysatorkörpers und der oder jeder Lagermatte im Gehäuse das Gehäuse im Bereich der nutartigen Vertiefungen unter Ausbildung des Presssitzes zwischen dem Gehäuse und dem Katalysatorkörper abschnittsweise zusammengepresst und damit plastisch verformt wird.

5. Verfahren nach Anspruch 4, **dadurch gekennzeichnet, dass** die Außenabmessungen des Gehäuses im Eintritts-.und Austrittsbereich durch Verformen, insbesondere durch Verpressen oder Aufweiten auf ein definiertes Maß kalibriert wird.

## Claims

1. A catalyst unit (10) for an exhaust gas catalytic converter, with a ceramic catalyst body (12) through which exhaust gas flows and with a metallic housing (13), which surrounds the catalyst body (12) seen perpendicularly to the through-flow direction (11) of the same at least in sections, wherein seen perpendicularly to the through-flow direction (11) of the catalyst (12) at least one bearing mat (15) is positioned between the catalyst body (12) and the housing (13), wherein the catalyst body (12) is held in the housing (13) in a force-locked manner via a press fit perpendicularly to the through-flow direction of the same subject to the intermediate arrangement of the or each bearing mat (15), namely in such a manner that seen in the through-flow direction (11) of the catalyst body (12) the press fit between the housing and the catalyst body is formed exclusively in defined axial positions, wherein the housing (13) in the defined axial positions comprises groove-like recesses (16) for reducing the inner cross section (17) of the housing (13) in sections, and wherein the press fit between the housing (13) and the catalyst body (12) is exclusively formed in the region of the groove-like recesses (16),
**characterized in that** seen in the through-flow direction (11) of the catalyst body (12) in the region of the groove-like recesses (16) of the housing (13), at least one bearing mat (15) is positioned between the catalyst body (12) and the housing (13).

2. The catalyst unit according to Claim 1, **characterized in that** the housing (13) seen in the through-flow direction (11) of the catalyst body (12) comprises a defined outer cross section (20) between the groove-like recesses (16).

3. The catalyst unit according to any one of the Claims 1 to 2, **characterized in that** in the housing (13), seen in the through-flow direction (11) of the catalyst body (12), apertures (21) are introduced downstream of the first groove-like recess (16) and upstream of the last groove-like recess (16).

4. A method for producing a catalyst unit according to any one of the Claims 1 to 3, with at least the following steps:
a) providing a ceramic catalyst body;
b) providing a metallic housing;
c) providing at least one bearing mat;
d) arranging the ceramic catalyst body and the or each bearing mat in the metallic housing and forming the press fit between the housing and the catalyst body,
**characterized in that** a housing with groove-like recesses in defined axial positions of the same is provided, wherein the inner cross section of the housing in the region of the groove-like recesses is larger than the outer cross section of the catalyst body surrounded by the or each bearing mat in those axial positions in which the press fit between the housing and the catalyst body is to be formed, wherein after the arranging of the catalyst body and of the or each bearing mat in the housing, the housing is compressed in sections in the region of the groove-like recesses subject to forming the press fit between the housing and the catalyst body and thereby plastically deformed.

5. The method according to Claim 4, **characterized in that** the outer dimensions of the housing in the inlet and outlet region are calibrated to a defined dimension by deforming, in particular by compressing or expanding.

## Revendications

1. Unité de catalyseur (10) pour un catalyseur de gaz d'échappement, comportant un corps de catalyseur (12) céramique, traversé par du gaz d'échappement et comportant un carter métallique (13), qui entoure au moins par portions le corps de catalyseur (12) vu perpendiculairement à la direction de traversée (11) de celui-ci, dans laquelle vu perpendiculairement à la direction de traversée (11) du corps de catalyseur (12) entre le corps de catalyseur (12) le carter (13) au moins un treillis (15) est positionné, dans laquelle le corps de catalyseur (12) est maintenu perpendiculairement à la direction de traversée de celui-ci en intercalant le ou chaque treillis (15) par l'intermédiaire d'un ajustement serré par conjonction de force dans le carter (13), à savoir de telle sorte que vu dans la direction de traversée (11) du corps de catalyseur (12) l'ajustement serré entre le carter et le corps de catalyseur est réalisé exclusivement à des positions axiales définies, dans laquelle le carter (13) présente à des positions axiales définies des évidements de type rainure (16) pour diminuer par portions la section transversale intérieure (17) du carter (13) et dans lequel l'ajustement serré entre le carter (13) et le corps de catalyseur (12) est réalisé exclusivement au niveau des évidements de type rainure,
**caractérisée en ce que** vu dans la direction de traversée (11) du corps de catalyseur (12) exclusivement au niveau des évidements de type rainure (16) du carter (13), au moins un treillis (15) est positionné entre le corps de catalyseur (12) et le carter (13).

2. Unité de catalyseur selon la revendication 1, **caractérisée en ce que** le carter (13) vu dans la direction de traversée (11) du corps de catalyseur (12) entre les évidements de type rainure (16) présente une section transversale extérieure définie (20).

3. Unité de catalyseur selon une des revendications 1 à 2, **caractérisée en ce que** dans le carter (13) vu dans la direction de traversée (11) du corps de catalyseur (12) en aval du premier évidement de type rainure (16) et en amont du dernier évidement de type rainure (16) des cavités (21) sont ménagées.

4. Procédé de fabrication d'une unité de catalyseur selon une des revendications 1 à 3, comportant au moins les étapes suivantes :
a) fourniture d'un corps de catalyseur céramique ;
b) fourniture d'un carter métallique ;
c) fourniture d'au moins un treillis ;
d) disposition du corps de catalyseur céramique et du ou de chaque treillis dans le carter métallique et réalisation d'un ajustement serré entre le carter et le corps de catalyseur,
**caractérisé en ce que** un carter avec des évidements de type rainure à des positions axiales définies de celui-ci est fourni, dans lequel la section transversale intérieure du carter au niveau d'évidement de type rainure est plus grande que la section transversale extérieure du corps de catalyseur entourant le ou chaque treillis aux positions axiales de ce dernier, auxquelles l'ajustement serré entre le carter et le corps de catalyseur doit être réalisé, dans lequel après la disposition du corps de catalyseur et du ou chaque treillis dans le carter, le carter est compressé par portions au niveau des évidements de type rainure en réalisant l'ajustement serré entre le carter et le corps de catalyseur et ainsi déformé plastiquement.

5. Procédé selon la revendication 4, **caractérisé en ce que** les dimensions extérieures du carter dans la zone d'entrée et de sortie sont calibrées par la déformation, notamment par pressage ou élargissement à une dimension définie.
